# DEMANDE DE BREVET EUROPEEN

(11) **EP 2 638 834 A1**
(43) Date de publication de la demande: **18.09.2013**
(21) Numéro de dépôt: 13170004.9
(22) Date de dépôt: 16.07.2010
(51) Int. Cl.: A47J 31/36

(54) **Dispositif pour la preparation d'une boisson extraite a partir d'une capsule**

(30) Priorité: 23.07.2009 WO PCT/IB2009/053205
(62) Demande divisionnaire de: 10752395.3
(71) Demandeur: Ethical Coffee Company SA, 1700 Fribourg (CH)
(72) Inventeur: Mariller, Alain, 1808 Les Monts-de-Corsier (CH)
(74) Mandataire: Grosfillier, Philippe

(57) **Abrégé**

Dispositif pour la préparation d'une boisson extraite à partir d'une capsule (1) comprenant un support de capsule (4) et une cage à capsule (5) à l'intérieur de laquelle sont disposés au moins une entrée d'eau et des moyens de perçage de capsule, ladite cage (5) étant dimensionnée de manière à déformer au moins partiellement toute capsule (1), constituée d'un matériau déformable au contact d'eau chaude, qui est disposée dans la cage (5), de manière à ce que la capsule (1) soit retenue dans la cage (5) consécutivement à son contact avec de l'eau chaude.

## Description

### Domaine de l'invention

La présente invention se situe dans le domaine de la préparation de boissons, p.ex. à base de café, par extraction d'une dose concentrée, p.ex. de café moulu, contenue dans une capsule. Elle se rapporte plus particulièrement aux dispositifs utilisant de telles capsules.

### Etat de la technique

Des capsules et des machines fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

D'autres capsules munies d'une membrane sont décrites dans les documents brevets suivants : EP 0 468 079 A, EP 0 806 373 A, EP 0 554 469 A.

### Exposé général de l'invention

La présente invention vise à éviter l'utilisation de capsules constituées d'un matériau déformable au contact d'eau chaude. Ce type de matériau peut en effet induire des disfonctionnements dans certains dispositifs.

L'invention a donc comme objet un dispositif pour la préparation d'une boisson extraite à partir d'une capsule comprenant un support de capsule et une cage à capsule à l'intérieur de laquelle sont disposés au moins une entrée d'eau et des moyens de perçage de capsule, caractérisé par le fait que ladite cage est dimensionnée de manière à déformer au moins partiellement toute capsule constituée d'un matériau déformable au contact d'eau chaude qui est disposée dans la cage, de manière à ce que la capsule soit retenue dans la cage consécutivement à son contact avec de l'eau chaude.

Selon un premier mode de réalisation de l'invention la paroi interne de la cage comprend un évidement dans lequel est logé un élément déformable dont le coefficient de rigidité est supérieur au coefficient de rigidité du matériau constituant la capsule.

L'évidement peut avoir la forme d'une gorge annulaire, d'un ou plusieurs trous.

Selon un autre mode de réalisation de l'invention la paroi interne de la cage comporte des éléments pivotants de type palette qui sont adaptés de manière à être intégralement logés dans la paroi de la cage si le coefficient de rigidité de la capsule est supérieur à une valeur déterminée et à émerger au moins partiellement de ladite paroi dans le cas contraire.

Selon un autre mode de réalisation de l'invention la paroi interne de la cage comprend un relief de type harpon.

Enfin, la paroi interne de la cage peut se présenter sous la forme d'une cloche (et possède un volume interne supérieur au volume des capsules.

### Exposé détaillé de l'invention

L'invention est décrite plus en détail ci-après au moyen d'exemples non limitatifs illustrés par les figures suivantes :

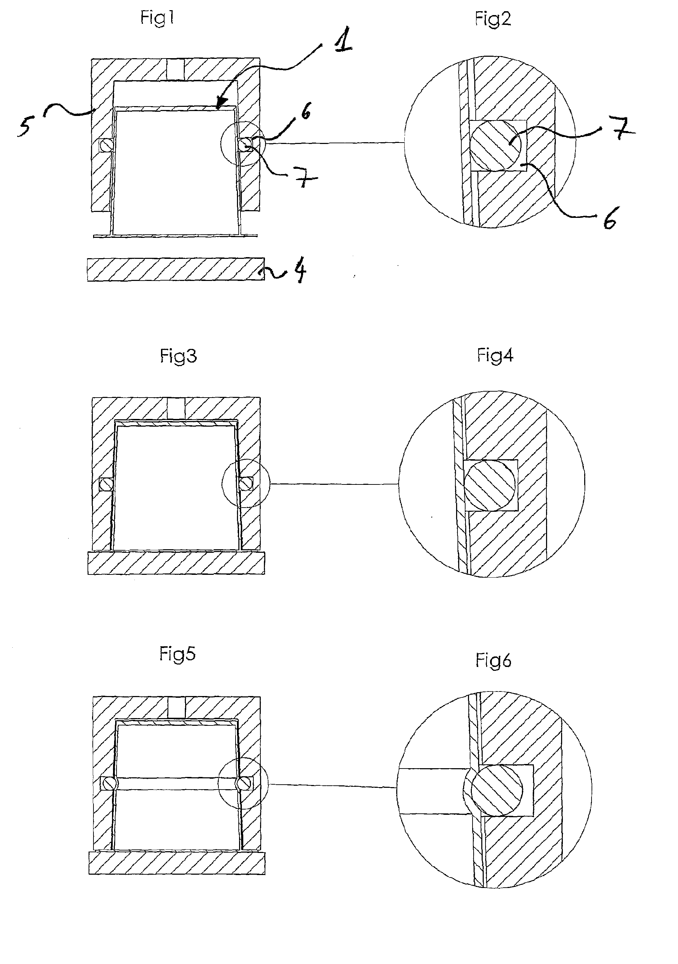

Les figures 1 à 6 montrent un exemple de dispositif selon l'invention dans lequel la paroi interne de la cage 5 comporte un évidement 6 en forme de gorge annulaire, l'intérieur de l'évidement 6 étant occupé par un élément légèrement déformable 7, p.ex. un O-ring ou un ressort, qui en se laissant un peu comprimer, autorise l'insertion d'une capsule rigide dans la cage 5, cela sans que la capsule 1 se déforme. Si la capsule 1 se ramollit consécutivement à sa mise en contact avec de l'eau chaude (voir figures 5 et 6), la paroi latérale de la capsule 1 est déformée au niveau de l'évidement 6. Une fois l'eau chaude évacuée, la capsule 1 se rigidifie et reste bloquée dans la cage 5, rendant de la sorte le dispositif inopérant.

Il convient de relever que l'élément légèrement déformable 7 doit être adapté de manière à exercer une certaine force en direction du centre de la cage 5.

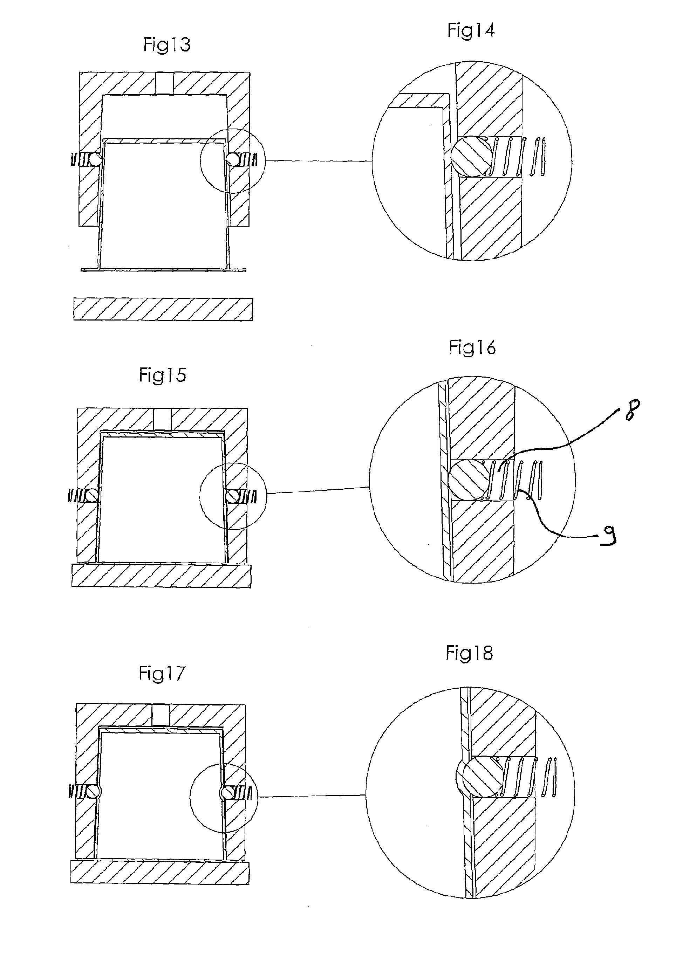

La variante illustrée sur les figures 13 à 18 fonctionne de manière similaire à celle des figures 1 à 6. Elle diffère seulement par le fait que l'évidement se présente sous forme d'au moins un trou cylindrique 8 dans lequel est disposé un ressort 9. De préférence, on utilise plusieurs trous 8 répartis autour de la capsule 1.

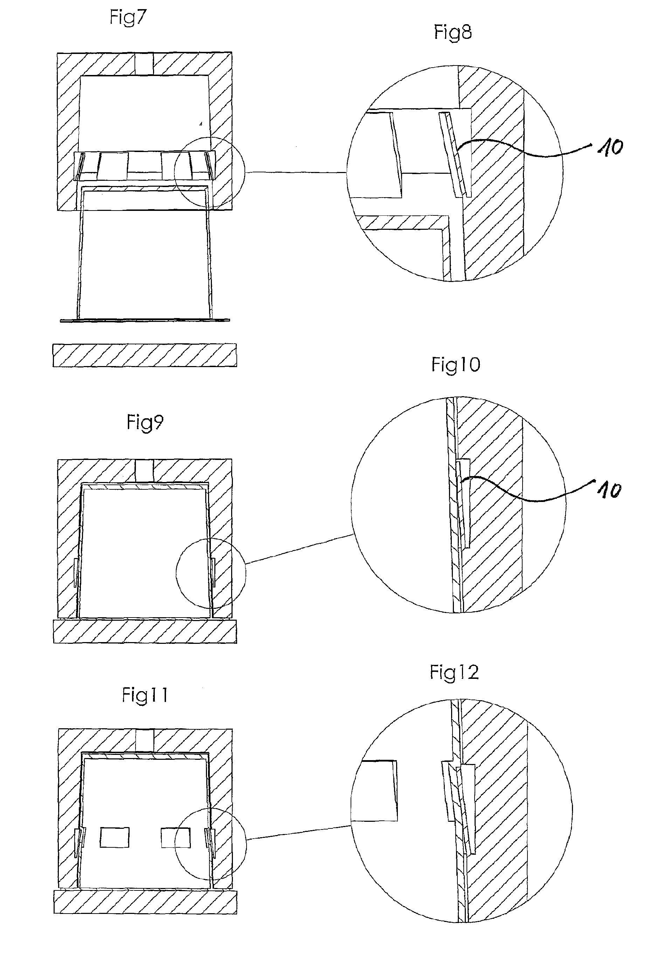

La variante présentée sur les figures 7 à 12 présente également une cage 5 avec un ou plusieurs évidements. Dans ce cas par contre, l'élément déformant a la forme d'une palette 10 pivotant autour d'un axe horizontal. Lorsque la capsule 1 est insérée dans la cage, la palette 10 est logée intégralement dans son évidement. Une fois la capsule 1 ramollie, chaque palette 10 s'incruste dans la paroi de la capsule 1. La géométrie des palettes 10 a pour effet d'induire un effet harpon. Comme on peut le voir sur les figures 11 et 12, la capsule 1 est retenue dans la cage 5.

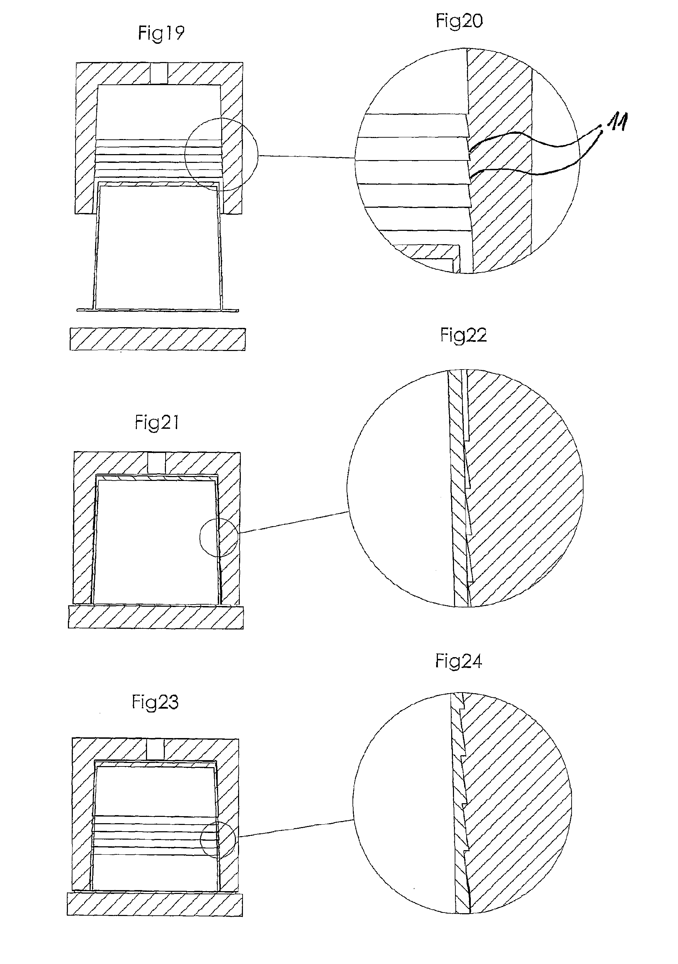

La variante des figures 19 à 24 se caractérise par une paroi interne de cage 5 qui comporte un relief dentelé en forme de harpon 7. Lorsque la capsule 1 se ramollit, une partie de sa matière se loge entre les dents de la cage 5, retenant de la sorte la capsule 1 dans la cage 5.

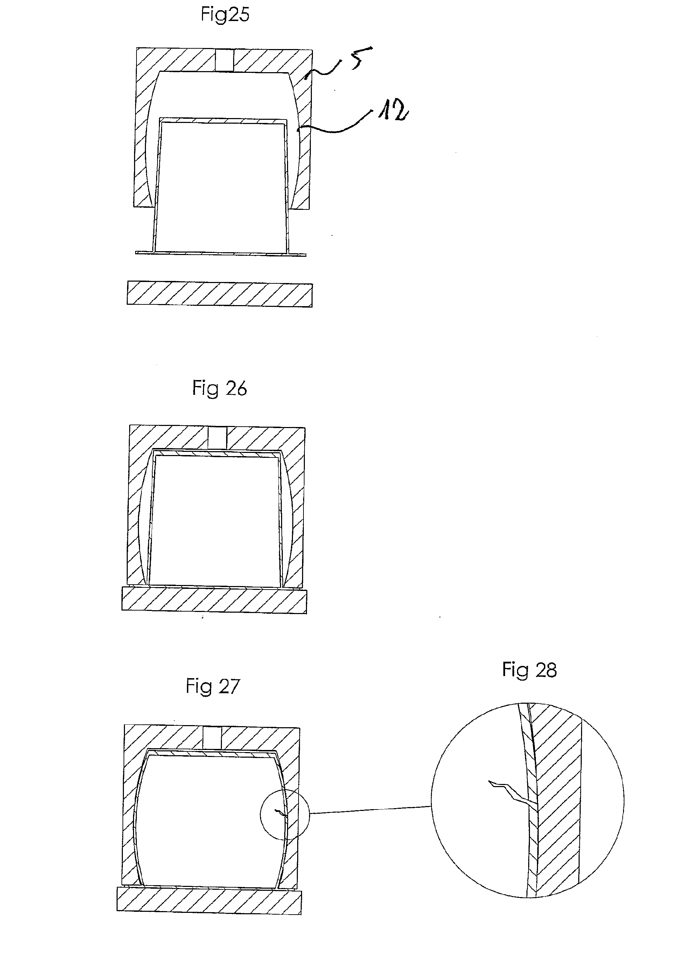

Enfin, la variante des figures 25 à 28 présente une cage 5 en forme de cloche dont le volume interne est supérieur à celui des capsules. Lors de l'entrée d'eau chaude dans une capsule déformable à son contact, la déformation est telle qu'un éclatement de sa paroi latérale peut se produire (voir figures 27 et 28). La capsule est donc inutilisable.

En outre, une fois l'eau chaude évacuée, la capsule 1 est bloquée dans la cage 5.

Il va de soi que l'invention ne limite aux exemples illustrés dans les figures.

## Revendications

1. Dispositif pour la préparation d'une boisson extraite à partir d'une capsule (1) comprenant un support de capsule (4) et une cage à capsule (5) à l'intérieur de laquelle sont disposés au moins une entrée d'eau et des moyens de perçage de capsule,
**caractérisé par le fait que** ladite cage (5) est dimensionnée avec un moyen déformant (6, 7; 10; 8, 9; 11; 12) de manière à déformer au moins partiellement toute capsule (1), constituée d'un matériau déformable au contact d'eau chaude, qui est disposée dans la cage (5), de manière à ce que la capsule (1) soit retenue dans la cage (5) consécutivement à son contact avec de l'eau chaude.

2. Dispositif selon la revendication 1 dans le moyen déformant comprend un évidement (6,8) dans lequel est logé un élément déformable (7,9) dont le coefficient de rigidité est supérieur au coefficient de rigidité du matériau constituant la capsule (1).

3. Dispositif selon la revendication 2 dans lequel ledit évidement (6) est une gorge annulaire.

4. Dispositif selon la revendication 2 dans lequel évidement est un trou (8).

5. Dispositif selon la revendication 4 comprenant plusieurs évidements en forme de trous.

6. Dispositif selon la revendication 1 dans le moyen déformant comporte des éléments pivotants de type palette (10) à effet harpon qui sont adaptés de manière à être intégralement logés dans la paroi de la cage (5) si le coefficient de rigidité de la capsule est supérieur à une valeur déterminée et à émerger au moins partiellement de ladite paroi dans le cas contraire.

7. Dispositif selon la revendication 1 dans lequel le moyen déformant comprend un relief de type harpon (11).

8. Dispositif selon la revendication 1 dans lequel le moyen déformant est formé par la paroi interne de la cage en forme de cloche (12) et possèdant un volume interne supérieur au volume des capsules.

9. Procédé pour la préparation d'une boisson extraite à partir d'une capsule dans un dispositif comprenant un support de capsule et une cage à capsule, dans lequel procédé pour une capsule constituée d'un matériau déformable au contact d'eau chaude, ladite capsule disposée dans la cage est retenue dans ladite cage consécutivement à son contact avec de l'eau chaude lorsqu'elle est déformée au moins partiellement par le moyen déformant de la cage.

10. Procédé selon la revendication précédente, dans lequel la capsule est déformée par un élément déformable logé dans un évidement de la cage dont le coefficient de rigidité est supérieur au coefficient de rigidité du matériau constituant la capsule.

11. Procédé selon la revendication 9, dans lequel la capsule est déformée par des éléments pivotants de type palette à effet harpon qui sont adaptés de manière à être intégralement logés dans la paroi de la cage si le coefficient de rigidité de la capsule est supérieur à une valeur déterminée et à émerger au moins partiellement de ladite paroi dans le cas contraire.

12. Procédé selon la revendication 9, dans lequel la capsule est déformée par un relief de type harpon.

13. Procédé selon la revendication 9, dans lequel la capsule est déformée par le fait que la paroi interne de la cage est en forme de cloche avec un volume interne supérieur à celui des capsules.
